# EUROPÄISCHE PATENTANMELDUNG

(11) **EP 1 211 384 A2**
(43) Veröffentlichungstag der Anmeldung: **05.06.2002**
(21) Anmeldenummer: 01128083.1
(22) Anmeldetag: 27.11.2001
(51) Int. Cl.: F01D 5/18, B23H 9/10, B23H 9/14

(54) **Verfahren zum Einbringen eines gekrümmten Kühlkanals in eine Gasturbinenkomponente sowie kühlbare Schaufel für eine Gasturbinenkomponente**

(30) Priorität: 02.12.2000 DE 10059997
(71) Anmelder: ALSTOM Power N.V., 1101 CS Amsterdam (NL)
(72) Erfinder: Beeck, Alexander, Dr., Orlando, Florida 32828 (US); Weigand, Bernhard, Prof. Dr., 70794 Filderstadt (DE)
(74) Vertreter: Liebe, Rainer

(57) **Zusammenfassung**

Verfahren zum Einbringen eines gekrümmten Kühlkanals (20) in eine Gasturbinenkomponente, insbesondere in eine Schaufel (10), mittels einer Elektrode (2), wobei eine Elektrode (2) in Form einer Wendel verwendet wird, und die Elektrode (2) um ihre zentrale Rotationsachse (R) drehbar angetrieben wird; sowie kühlbare Schaufel (10) für eine Gasturbinenkomponente mit einem schraubenlinienförmigen Kühlkanal (20).

## Beschreibung

### Technisches Gebiet

Die Erfindung betrifft ein Verfahren zum Einbringen eines gekrümmten Kühlkanals in eine Gasturbinenkomponente gemäß dem Oberbegriff des Anspruchs 1. Die Erfindung betrifft weiterhin eine kühlbare Schaufel für eine Gasturbinenkomponente gemäß dem Oberbegriff des Anspruchs 3.

### Stand der Technik

Im Allgemeinen werden Kühlkanäle in Gasturbinenkomponenten in Form von Bohrungen konzipiert, die entlang einer geradlinig verlaufenden Bohrungsachse eingebracht werden. Bei einer Reihe von Anwendungen, wie beispielsweise bei thermisch hoch belasteten Gasturbinenschaufeln komplexer Geometrie, ist es schwierig, Kühlkanäle in geeigneter Weise an besonders hoch belasteten Abschnitten anzubringen. An schwer zugänglichen Stellen, wie beispielsweise am Übergangsbereich zwischen dem Schaufelblatt und der Plattform oder in Wandabschnitten hoher thermischer Belastung müssten Bohrungen angebracht werden, deren Bohrungsachse nicht linear verläuft, sondern einer dreidimensional im Raum gekrümmten Kurve folgen.

Aus der EP 0 659 978 A1, von der die Erfindung ausgeht, ist eine kühlbare Turbinenschaufel bekannt, die in an sich bekannter Weise aus einem Schaufelblatt, einem Schaufelfuß sowie einer Plattform aufgebaut ist. Das Schaufelblatt besteht aus einer saugseitigen und einer druckseitigen Wand, die über eine Vorderkante und eine Hinterkante unter Bildung eines Hohlraums miteinander verbunden sind. Im Bereich einer Schaufelspitze sind gekrümmte Kanäle vorgesehen.

In dem Dokument wird hinsichtlich des Verfahrens zum Einbringen der gekrümmten Kanäle ganz allgemein auf elektrochemische Verfahren oder auch auf Laserstrahlbohren verwiesen. Nähere Einzelheiten hierzu sind diesem Dokument jedoch nicht zu entnehmen.

Weiterhin ist festzuhalten, dass die dort gezeigten gekrümmten Kanäle im Bereich der Schaufelspitze angebracht sind. Sie verlaufen ausgehend von der Druckseite der Schaufel zur Schaufelspitze. Es ist dies also ein Bereich, der leicht zugänglich ist und somit die Einbringung eines gekrümmten Kanals ohne größere Schwierigkeiten zulässt. Eine Übertragung dieser Technologie auf die eingangs beschriebenen, schwer zugänglichen Bereiche einer Gasturbinenschaufel stößt jedoch auf Schwierigkeiten.

### Darstellung der Erfindung

Die Erfindung versucht, die beschriebenen Nachteile zu vermeiden. Ihr liegt einerseits die Aufgabe zugrunde, ein Verfahren zum Einbringen eines gekrümmten Kühlkanals in eine Gasturbinenkomponente, insbesondere in eine Schaufel, mittels einer Elektrode zur Verfügung zu stellen, das es erlaubt, Kühlkanäle auch an schwer zugänglichen Stellen vorzusehen. Andererseits liegt der Erfindung die weitere Aufgabe zugrunde, eine kühlbare Schaufel für eine Gasturbinenkomponente, insbesondere eine Turbinenschaufel zu konzipieren, die einen gekrümmten Kühlkanal aufweist, der auch an schwer zugänglichen Stellen die erforderliche Wärmeabführung ermöglicht.

Erfindungsgemäß wird dies in einem Verfahren dadurch erreicht, dass eine Elektrode in Form einer Wendel verwendet wird. Die Elektrode wird um ihre zentrale Rotationsachse drehend angetrieben, wodurch sich ein gekrümmter Kanal in Form einer Schraubenlinie ergibt. Damit ist es möglich, speziell an Übergangsbereichen zwischen Plattform und Schaufelblatt oder in der Wand des Schaufelblatts in thermisch hoch belasteten Bereichen Kühlkanäle auf einfache Art und Weise anzubringen.

Es versteht sich von selbst, dass die Elektrode in Bezug auf die Rotationsachse axial verschieblich gelagert sein muss, um entsprechend der Steigung der Wendel den korrespondierenden Vorschub zu ermöglichen.

Bevorzugt wird die Elektrode in Bezug auf die Rotationsachse zwangsgekoppelt axial verschieblich angetrieben. Hierdurch ist sichergestellt, dass die Elektrode optimal in dem jeweils gerade erzeugten Kanalabschnitt geführt ist.

Hinsichtlich der Wahl der Querschnittsform des Elektrodendrahtes, und damit der Querschnittsform des erzeugten Kühlkanals, besteht weitgehend Freizügigkeit. Neben rechteckigen Querschnitten können insbesondere auch kreis- oder ellipsenförmige Querschnitte realisiert werden, um optimale Strömungsverhältnisse innerhalb des Kühlkanals zu gewährleisten.

Obwohl sich das vorstehend beschriebene Verfahren bei praktisch allen Gasturbinenkomponenten einsetzen lässt, findet es bevorzugt Anwendung bei kühlbaren Schaufeln.

Die eingangs beschriebene Aufgabe wird bei einer gattungsgemäßen, kühlbaren Schaufel dadurch gelöst, dass der Kühlkanal wenigstens einen schraubenlinienförmigen Abschnitt aufweist. Derartige Kühlkanäle ermöglichen eine äußerst effektive Kühlung gerade solcher Stellen, die thermisch besonders stark beansprucht sind. Auch schwer zugängliche Stellen wie beispielsweise der Übergangsbereich vom Schaufelblatt zur Plattform oder Wandbereiche des Schaufelblatts, die von Heißgas besonders stark thermisch belastet sind, lassen sich optimal kühlen.

Eine erste Gruppe von bevorzugten Ausführungsformen einer derartigen Schaufel beziehen sich auf Kühlkanäle, die in der Wand des Schaufelblatts angebracht sind.

Eine erste Variante sieht vor, dass sich der Kühlkanal weitgehend über die gesamte Höhe des Schaufelblatts durchgehend erstreckt. Das Schaufelblatt wird somit in Richtung der Schaufelhöhe weitgehend gleichmäßig gekühlt. Darüber hinaus ist ein derartiger Kühlkanal kostengünstig herstellbar, da er in einem einzigen Arbeitsgang gebohrt werden kann.

Je nach der vom Heissgasstrom eingetragenen thermischen Belastung kann es vorteilhaft sein, mehrere, voneinander getrennte Kühlkanäle vorzusehen.

Beispielsweise hat es sich als günstig erwiesen, mehrere seitlich nebeneinander angeordnete Kühlkanäle vorzusehen. Insbesondere im Bereich der Vorderkante können beispielsweise drei bis fünf derartiger Kühlkanäle in achsparalleler Anordnung eingebracht werden, um im Falle des Wandern des Staupunkts bei unterschiedlichen Betriebszuständen stets eine sichere Kühlung des korrespondierenden Wandbereichs sicherzustellen.

Eine weitere bevorzugte Variante sieht vor, die Kühlkanäle untereinander anzuordnen. In diesem Fall erstreckt sich der Kühlkanal nicht durchgehend über die gesamte Höhe des Schaufelblatts, sondern jeweils nur über einen bestimmten Teilabschnitt. Hierdurch ist es möglich, der über die Schaufelhöhe variierenden thermischen Belastung Rechnung zu tragen und Kühlkanäle an den Stellen vorzusehen, an denen die thermische Belastung am höchsten ist. Diese Konfiguration erlaubt es zudem, die Kühlungsleistung zu steigern, da das Kühlmedium längs der Schaufelhöhe an mehreren Stellen zu- und abgeführt wird.

Eine weitere Variante sieht schließlich vor, mehrere Kühlkanäle ineinander zu verschachteln. Der radiale und/oder axiale Versatz der einzelnen Kühlkanäle ist so gewählt, dass sie jeweils voneinander getrennt verlaufen. Damit lässt sich an thermisch besonders hoch belasteten Stellen eine starke Kühlwirkung erzielen, ohne den Querschnitt der Wand zu stark zu schwächen.

Ein weiterer interessanter Aspekt besteht in der Möglichkeit, Ausblaseöffnungen zur Ausbildung eines Kühlfilms vorzusehen. Die Ausblaseöffnungen sind als sog. Filmbohrungen gestaltet, die von dem Kühlkanal ausgehen und an der Oberfläche des Schaufelblatts münden. Der schraubenlinienförmige Verlauf des Kühlkanals ermöglicht durch eine entsprechende Auslegung, dass sich ein optimaler Kühlfilm erreichen lässt. Hierzu kann auch der durch die Schraubenlinienform erzeugte Drall der Kühlluftströmung beitragen.

Ein weiterer bedeutsamer Anwendungsfall bezieht sich schließlich auf die Anbringung eines solchen Kühlkanals im Übergangsbereich von Schaufelblatt zu Plattform. Dieser Übergangsbereich besitzt in der Regel einen Übergangsradius, der sehr grossen thermischen und mechanischen Belastungen unterliegt. Dieser Bereich muss deshalb gezielt gekühlt werden, um die maximal zulässigen Spannungswerte nicht zu überschreiten.

Bevorzugt ist der Kühlkanal mit mehreren Zu- und Abführkanälen versehen, so dass das Kühlmedium beim Durchströmen des Kühlkanals nicht übermäßig erhitzt wird. Ein derartiger Kühlkanal kann auf einfache Art und Weise dadurch erzeugt werden, dass beim Einbringen des Kühlkanals die wendelförmige Elektrode so positioniert wird, dass lediglich ein Winkelsektor eines Schraubengangs innerhalb der Schaufel verläuft und der verbleibende Sektor im Bereich eines vom Kühlmedium durchströmten Hohlraums liegt. Es entstehen somit mehrere, übereinander liegende Kühlkanalabschnitte, die von dem im Hohlraum strömenden Kühlmedium optimal versorgt werden können.

### Kurze Beschreibung der Zeichnung

Es sind Ausführungsbeispiele der Erfindung schematisch dargestellt. Es zeigen:
- Fig. 1: Schaufelabschnitt in Röntgendarstellung mit Elektrode, perspektivische Ansicht;
- Fig. 2: Schaufelabschnitt mit Elektrode, perspektivische Ansicht;
- Fig. 3: Schaufelabschnitt ohne Elektrode, perspektivische Ansicht;
- Fig. 4: Schaufelabschnitt mit Kühlkanälen gemäß einer ersten Ausführungsvariante, Schnittdarstellung;
- Fig. 5: Schaufelabschnitt mit Kühlkanälen gemäß einer zweiten Ausführungsvariante, Schnittdarstellung;
- Fig. 6: Schaufelabschnitt mit Kühlkanälen gemäß einer dritten Ausführungsvariante;
- Fig. 7: Wandabschnitt einer Schaufel mit Kühlkanälen gemäß einer ersten Ausführungsvariante, Schnittdarstellung; und
- Fig. 8: Wandabschnitt einer Schaufel mit Kühlkanälen gemäß einer zweiten Ausführungsvariante, Schnittdarstellung.

Es sind lediglich die für das Verständnis der Erfindung wesentlichen Elemente gezeigt und beschrieben.

### Weg zur Ausführung der Erfindung

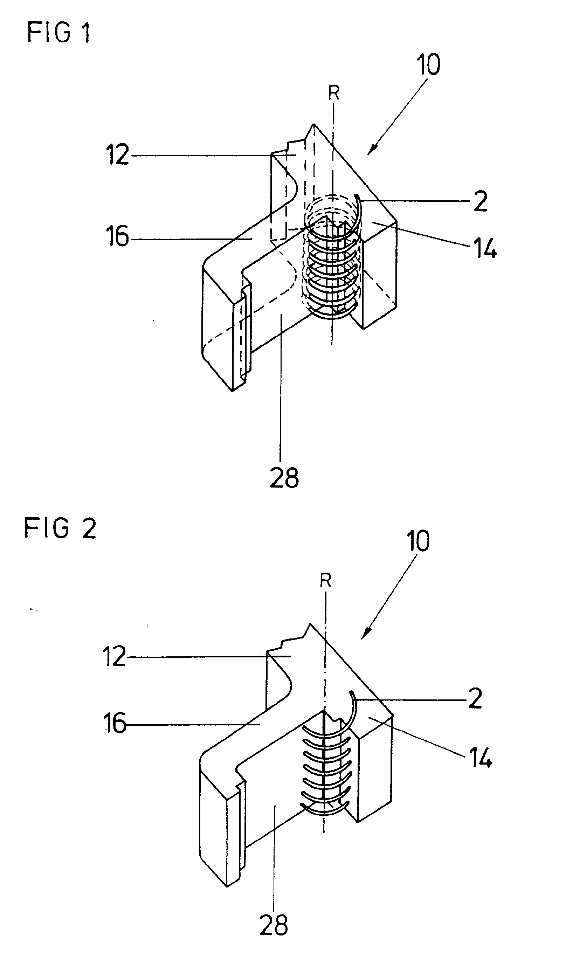

Das erfindungsgemäße Verfahren wird insbesondere anhand des in den Fig. 1 bis 3 dargestellten Ausführungsbeispiels erläutert, das den Abschnitt einer Schaufel 10 im Übergangsbereich von einem Schaufelblatt 12 zu einer Plattform 16 zeigt. Unterhalb der Plattform 16 ist ein Hohlraum 28 gebildet, der einerseits durch die Plattform 16 und andererseits durch einen Schaufelfuß 14 begrenzt ist und dessen Funktion nachstehend näher erläutert wird.

Gemäß der Erfindung wird eine Elektrode in Form einer Wendel 2 verwendet, die in hier nicht näher dargestellter Art und Weise um Ihre Rotationsachse R drehend angetrieben wird.

Mit der Rotationsbewegung zwangsgekoppelt wird die Elektrode 2 axial verschieblich angetrieben, wodurch sich die Elektrode 2 im Bereich der Plattform 16 und des Schaufelfußes 14 in das Material einarbeitet. Es wird hierbei ein an sich bekanntes Verfahren, wie beispielsweise ein Funkenerosionsverfahren oder ein elektrochemisches Bohrverfahren verwendet.

Durch die gekoppelte Dreh- und Verschiebebewegung wird die Elektrode 2 schraubenförmig vorangetrieben. Hierdurch entsteht ein Kanal bzw. ein Kühlkanal 20, der in dem von der Elektrode 2 bearbeiteten Abschnitt schraubenlinienförmig gestaltet ist. Soweit die Elektrode vollständig innerhalb beispielsweise der Plattform 16 positioniert ist, entsteht ein durchgängiger Kühlkanal 20.

In dem hier gezeigten Ausführungsbeispiel ist die Elektrode 2 in Bezug auf die Plattform 16 und den Schaufelfuß 14 so positioniert, dass in einer Ansicht von oben ein Winkelsektor im Bereich des Hohlraums 28 liegt. Die Elektrode 2 tritt somit jeweils aus dem Schaufelfuß 14 aus, um nach einer weiteren Drehung um ca. 90° in den Bereich der Plattform 16 einzutreten. Auf diese Weise entsteht kein einzelner, durchgängiger Kühlkanal 20, sondern eine Vielzahl parallel verlaufender Kanalabschnitte mit Eintrittsöffnungen 22 und Austrittsöffnungen 24.

Hinsichtlich der geometrischen Auslegung der Wendel 2 besteht weitgehend Freizügigkeit. Es versteht sich von selbst, dass die Steigung der Wendel 2 als Maß der axialen Verschiebung in Bezug auf die Rotation maßgeblich ist. Die Zwangskopplung ist an sich lediglich zu Beginn des Bohrvorgangs erforderlich, da danach die Wendel 2 in dem bereits gebohrten Abschnitt geführt ist. Dies gilt jedoch nur insoweit, als die Elektrode 2 eine ausreichende mechanische Stabilität aufweist.

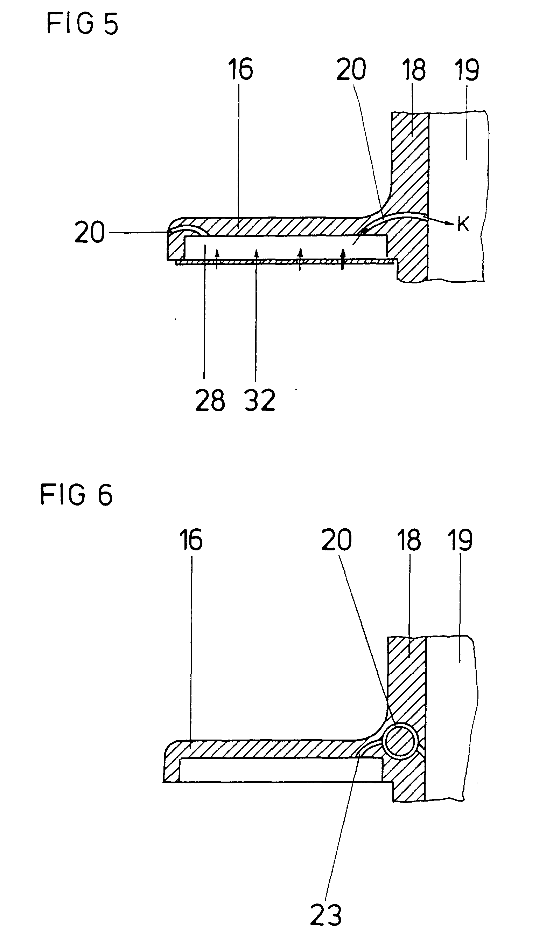

Die Ausführungsvarianten gemäß den Fig. 4 bis 6 zeigen verschiedene Möglichkeiten, derartige Kühlkanäle zur Realisierung unterschiedlicher Kühlkonzepte im Übergangsbereich zwischen Schaufelblatt und Plattform zu nutzen. Dieser Übergangsbereich ist aufgrund des an dieser Stelle auftretenden geringen Radiusses in Verbindung mit der hohen thermischen Belastung besonders gefährdet und muss deshalb optimal gekühlt werden.

Fig. 4 zeigt eine Schaufel 10 mit einem Schaufelblatt 12, einem Schaufelfuß 14, sowie einer Plattform 16. Das Schaufelblatt 12 ist hohl ausgeführt, d. h. zwischen den Wänden 18 ist ein Hohlraum 19 vorhanden, der (hier nicht dargestellt) von einem Kühlmedium K durchströmbar ist.

Im Übergangsbereich zwischen Schaufelblatt 12 bzw. Schaufelfuß 14 und der Plattform 16 ist ein schraubenlinienförmig verlaufender Kühlkanal 20 dargestellt. Im Bereich des Schaufelfußes 14 ist eine Eintrittsöffnung 22 und im Bereich der Plattform 16 eine Austrittsöffnung 24 vorhanden. Unterhalb der Plattform 16 ist ein Prallblech 30 angeordnet, so dass zwischen der Plattform 16 und dem Prallblech 32 ein Hohlraum 28 entsteht.

In an sich bekannter Weise besitzt das Prallblech 30 Prallbohrungen 32, durch die Kühlmedium K zunächst in den Hohlraum 28 eintritt und von dort die Schaufel 10 im Bereich der Plattform 16 durch Ausblaseöffnungen in Form von Firmbohrungen 26 verlässt.

Zusätzlich strömt ein Teil Kühlluftstrom K durch die Eintrittsöffnung 22, die im Bereich des Schaufelfußes 14 unterhalb des Prallblechs 28 liegt. Aufgrund der Druckdifferenz, die zwischen diesem Bereich und dem Hohlraum 28 besteht, strömt dieser Teil Kühlluftstrom K durch den Kühlkanal 20 und verlässt diesen durch die Austrittsöffnung 24 im Bereich des Hohlraums 28. Dort wird er dem übrigen Kühlmedium K zugemischt und verlässt die Schaufel 10 durch die Filmbohrungen 26.

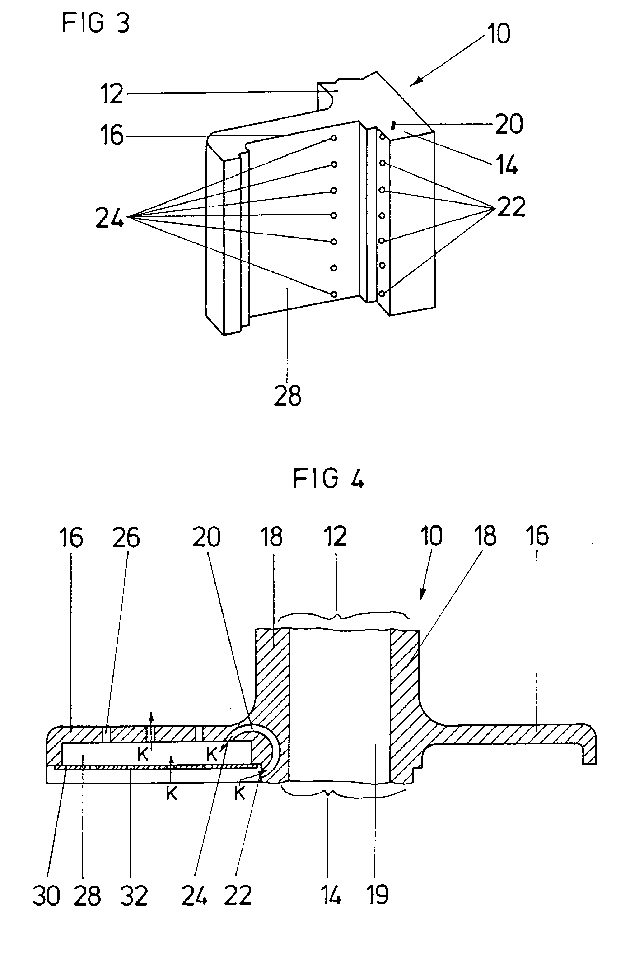

Wie insbesondere in Fig. 3 dargestellt, sind eine Vielzahl von Eintrittsöffnungen 22 und Austrittsöffnungen 24 vorhanden, so dass eine gleichmäßige Kühlung entlang einer Ebene senkrecht zur Zeichenebene gemäß Fig. 4 ermöglicht wird.

Fig. 5 und 6 zeigen Varianten von Kanälen 20 anhand eines Halbschnitts analog zur Darstellung gemäß Fig. 4.

Die Ausführungsvariante gemäß Fig. 5 besitzt eine erste Gruppe von Kühlkanälen 20 im Übergangsbereich zwischen der Wand 18 und der Plattform 16 sowie eine zweite Gruppe von Kühlkanälen 20 im Endbereich der Plattform 16. Beide Gruppen von Kühlkanälen 20 werden ausschließlich über den Hohlraum 28 gespeist.

Die Variante gemäß Fig. 6 zeigt einen senkrecht zur Zeichenebene durchgängigen schraubenlinienförmigen Kühlkanal 20, der von einem Zuführkanal 23 gespeist wird und einen Abführkanal 25 aufweist, der im Bereich des Hohlraums 19 mündet. Ebenso ist es möglich, eine Vielzahl von Zuführkanälen 23 und Abführkanälen25 vorzusehen, um die Kühlwirkung zu vergleichmäßigen.

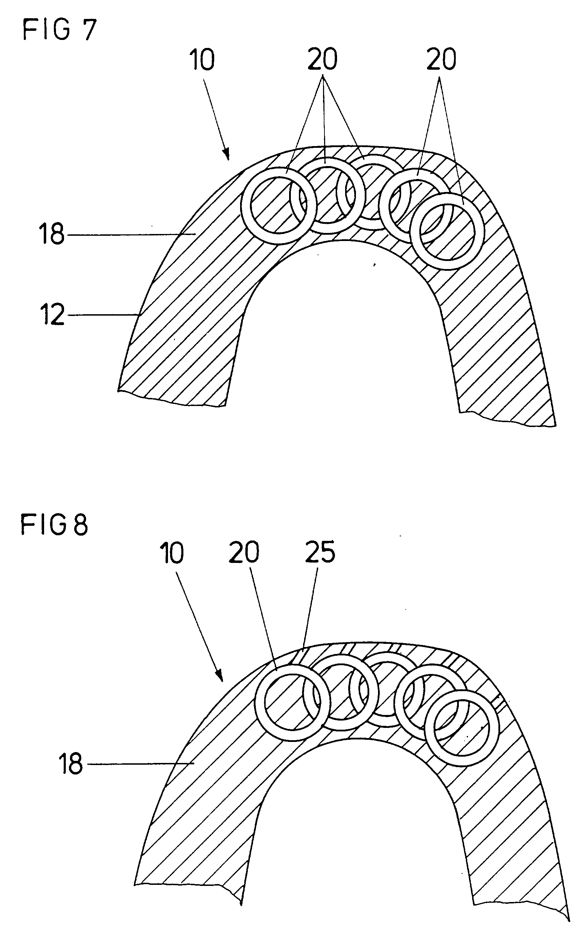

Die in Fig. 7 und 8 dargestellten Varianten zeigen Kühlkonzepte, die innerhalb einer Wand 18 (beispielsweise im Staupunktbereich der Schaufel 10) realisierbar sind. Es sind fünf Kühlkanäle 20 gezeigt, die sich (hier nicht dargestellt) weitgehend über die gesamte Höhe des Schaufelblatts 12, d. h. senkrecht zur dargestellten Schnittebene, erstrecken. Weiterhin ist die Anordnung so gewählt, dass jeder der Kühlkanäle 20 getrennt von den Übrigen verläuft, wobei durch seitliche und in Höhenrichtung verschachtelte Anordnung erreicht wird, dass eine optimierte Kühlung erzeugt wird.

Die in Fig. 8 dargestellte Ausführungsform unterscheidet sich von derjenigen gemäß Fig. 4 darin, dass Abführkanäle 25 vorgesehen sind. Diese ermöglichen die Ausbildung eines nicht näher dargestellten Kühlfilms.

Eine weitere, nicht dargestellte Variante der Ausführungsformen nach Fig. 7 und 8 sieht vor, dass die einzelnen Kühlkanäle 20 nicht durchgehend über die gesamte Höhe des Schaufelblatts vorgesehen sind. Statt dessen sind einzelne schraubenlinienförmige Kühlkanäle mit jeweils wenigen Windungen vorgesehen, die übereinander, jedoch voneinander getrennt, angebracht sind. Diese können beispielsweise gezielt in Schaufelhöhenmitte dichter angeordnet werden, um dem lokalen Wärmeeintrag durch die Heissgasströmung gerecht zu werden.

Mit dem erfindungsgemäßen Konzept lassen sich optimale Kühlkonzepte kostengünstig umsetzen, insbesondere können auch schwer zugängliche Stellen mit Kühlkanälen versehen werden.

### Bezugszeichenliste

- 2: Elektrode, Wendel
- 10: Schaufel
- 12: Schaufelblatt
- 14: Schaufelfuß
- 16: Plattform
- 18: Wand
- 19: Hohlraum
- 20: Kühlkanal
- 22: Eintrittsöffnung
- 23: Zuführkanal
- 24: Austrittsöffnung
- 25: Abführkanal
- 26: Filmbohrung, Ausblaseöffnung
- 28: Hohlraum
- 30: Prallblech
- 32: Prallbohrung
- K: Kühlmedium
- R: Rotationsachse

## Patentansprüche

1. Verfahren zum Einbringen eines gekrümmten Kühlkanals in eine Gasturbinenkomponente, insbesondere in eine Schaufel, mittels einer Elektrode, **dadurch gekennzeichnet, dass** eine Elektrode (2) in Form einer Wendel verwendet wird, und dass die Elektrode (2) um ihre zentrale Rotationsachse (R) drehbar angetrieben wird.

2. Verfahren nach Anspruch 1, **dadurch gekennzeichnet, dass** die Elektrode (2) in Bezug auf die Rotationsachse (R) zwangsgekoppelt axial verschieblich angetrieben wird.

3. Kühlbare Schaufel für eine Gasturbinenkomponente, insbesondere Turbinenschaufel, mit einem Schaufelblatt, einem Schaufelfuß und einer Plattform, sowie mit wenigstens einem gekrümmten Kühlkanal, **dadurch gekennzeichnet, dass** der Kühlkanal wenigstens einen schraubenlinienförmigen Abschnitt (20) aufweist.

4. Schaufel nach Anspruch 3, **dadurch gekennzeichnet, dass** der Kühlkanal (20) in einer Wand (18) des Schaufelblatts (12) angebracht ist.

5. Schaufel nach Anspruch 4, **dadurch gekennzeichnet, dass** sich der Kühlkanal (20) weitgehend über die gesamte Höhe des Schaufelblatts (12) erstreckt.

6. Schaufel nach Anspruch 4 oder 5, **dadurch gekennzeichnet, dass** mehrere voneinander getrennte Kühlkanäle (20) vorgesehen sind.

7. Schaufel nach Anspruch 6, **dadurch gekennzeichnet, dass** die Kühlkanäle (20) seitlich nebeneinander angeordnet sind.

8. Schaufel nach Anspruch 6, **dadurch gekennzeichnet, dass** die Kühlkanäle (20) untereinander angeordnet sind.

9. Schaufel nach Anspruch 7 oder 8, **dadurch gekennzeichnet, dass** die Kühlkanäle (20) ineinander verschachtelt angeordnet sind.

10. Schaufel nach einem der Ansprüche 4 bis 9, **dadurch gekennzeichnet, dass** Ausblaseöffnungen (26) zur Ausbildung eines Kühlfilms vorhanden sind, die von den Kühlkanälen (20) ausgehen.

11. Schaufel nach Anspruch 3, **dadurch gekennzeichnet, dass** der Kühlkanal (20) im Übergangsbereich vom Schaufelblatt (12) zur Plattform (16) angebracht ist.

12. Schaufel nach einem der Ansprüche 3 bis 11, **dadurch gekennzeichnet, dass** der Kühlkanal (20) mit mehreren Zu- und/oder Abführkanälen versehen ist.
